# EUROPEAN PATENT SPECIFICATION

(11) **EP 1 665 006 B1**
(45) Date of publication and mention of the grant of the patent: **01.07.2009**
(21) Application number: 04784290.1
(22) Date of filing: 15.09.2004
(51) Int. Cl.: G06F 1/32, H04L 12/12

(54) **SHARING A WIRELESS COMMUNICATIONS MODULE BETWEEN TWO COMPUTING DEVICES**
WECHSELSEITIGE NUTZUNG EINES DRAHTLOSEN KOMMUNIKATIONSMODULS DURCH ZWEI DATENVERARBEITUNGS-EINRICHTUNGEN
PARTAGE D'UN MODULE DE COMMUNICATION SANS FIL ENTRE DEUX DISPOSITIFS INFORMATIQUES

(30) Priority: 15.09.2003 US 663221
(43) Date of publication of application: 07.06.2006
(73) Proprietor: Intel Corporation, Santa Clara, CA 95052 (US)
(72) Inventor: GUPTA, Vivek, Portland, OR 97229 (US); KARDACH, James, Saratoga, CA 95070 (US); BELMONT, Brian, West Linn, OR 97068 (US)
(74) Representative: Hutchinson, Glenn Stanley
(86) International application number: PCT/US2004/030384
(87) International publication number: WO 2005/029792

(56) References cited:
- EP-A- 0 998 094
- WO-A-01/82061
- US-A1- 2002 124 196
- US-B1- 6 282 665

## Description

### FIELD OF THE INVENTION

This invention relates to computer software and hardware, and more specifically to a method and apparatus for sharing a wireless communications module between a primary processor system and a secondary process system of a computer system architecture.

### BACKGROUND OF THE INVENTION

As electronic and computer technology continues to evolve, communication of information to a user at all times becomes increasingly important. For example, now more than ever users of personal digital assistants (PDAs) are continuously checking email, looking-up contacts, synchronizing documents on-the-go, and scheduling. Other users are utilizing mobile phones with built-in PDAs to do text and video based messaging. In addition to these new devices, more and more users are using tablet PCs and notebook computers. The mobility of the powerful computing devices makes them ideal for the business traveler. A general computing system for a mobile device will now be described.

### A. Computing System

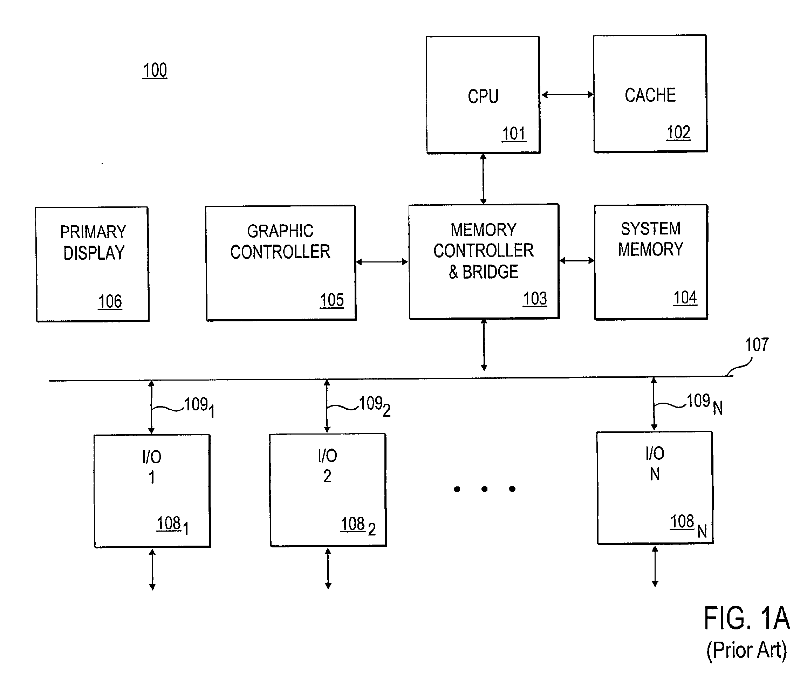

**Figure 1A** shows an embodiment of a mobile computing system 100. The computing system includes a Central Processing Unit (CPU) 101, a cache 102, a memory controller and bridge 103 and a system memory 104. Software instructions performed by the computing system (and its corresponding data) are stored in the system memory 104 and cache 102 (where frequently used instructions and data are stored in cache 102). The software instructions (together with corresponding data) are executed by the CPU 101. The memory controller portion of the memory controller and bridge function 103 is responsible for managing access to the system memory 104 (which may be used by functional elements other than the CPU 101 such as the graphics controller 105 and various I/O units).

The graphics controller 105 and display 106 provide the computer generated images observed by the user of the computing system 100. The bridge portion of the memory controller and bridge function 103 provides a system bus 107 that multiple Input/Output (I/O) units 108₁ through 108_{N} may use to communicate with one another, the CPU 101, the system memory 104, etc.. I/O buses 109₁ through 109_{N} also interconnects I/O units 108₁ through 108_{N} to the system bus 107. Here, I/O units are typically viewed as functional units that send/receive information to/from the computing system (e.g., a networking adapter, a MODEM, a wireless interface, a keyboard, a mouse, etc.) and/or function units used for storing information within the computing system 100 (e.g., a hard disk drive unit). Note that the depiction of **Figure 1A** is exemplary and other computing system architectures are possible (e.g., multiprocessor computing systems, for example).

Buses 107 and 109₁ through 109_{N} may be bus structures, such as a Universal Serial Bus (USB) bus, in order to couple a keyboard, mouse and other lower performance peripherals. Also, "parallel" and/or "serial" ports (not shown in **Figure 1A** for simplicity) may also be viewed as additional I/O units.

### B. GPRS Wireless Network

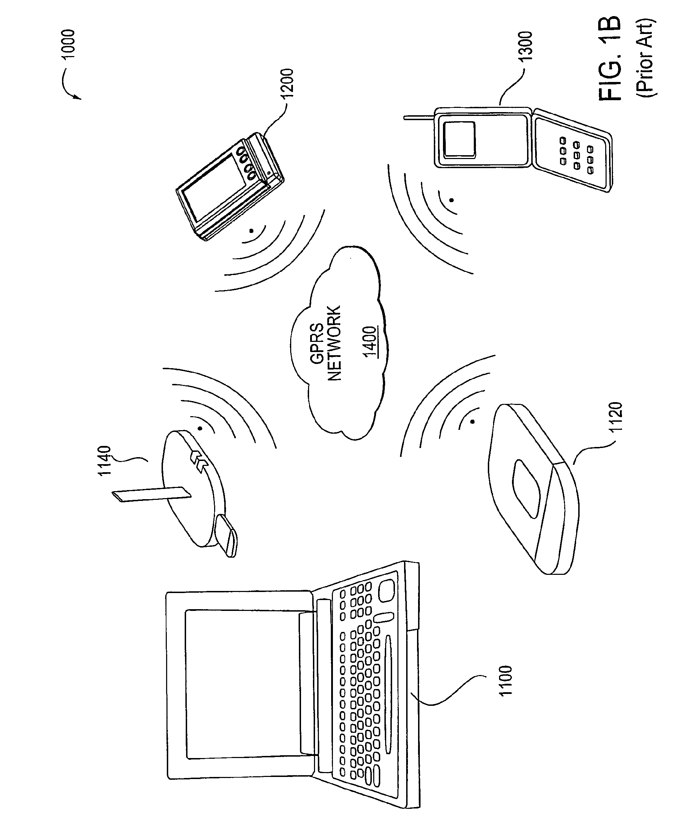

**Figure 1B** illustrates a prior art wireless network 1000. Network 1000 includes a mobile computing system 1100, such as described illustrated in **Figure 1A****.** Computing system 1100 communicates with multiple GPRS enabled devices, such as mobile phone 1300, personal digital assistant (PDA) 1200, or similar multifunction GPRS enabled device via a GPRS network 1400. Mobile computing system 1100 communicates with GPRS network 1400 using Universal Serial Bus (USB) GPRS Adapter 1140, Personal Computer Memory Card International Association (PCMCIA) GPRS card 1120, or an internal GPRS adapter.

GPRS is a computing and telecommunications industry specification that describes how mobile phones, computers, and PDAs can easily interconnect with each other and with home and business phones and computers using a short-range wireless connection. Using this technology, users of cellular phones, pagers, and personal digital assistants such as the PalmPilot will be able to buy a three-in-one phone that can double as a portable phone at home or in the office, get quickly synchronized with information in a desktop or notebook computer, initiate the sending or receiving of a fax, initiate a print-out, and, in general, have all mobile and fixed computer devices be totally coordinated.

General Packet Radio Services (GPRS) is a packet-based wireless communication service that promises data rates from 56 up to 114 Kbps and continuous connection to the Internet for mobile phone and computer users.
US 2002/0124196 is concerned with reducing power consumption with a view to increasing battery life within a system comprising a powerful processor and a less powerful processor having respective power consumptions. The solution to this technical problem in US 2002/0124196 is to direct tasks to one of the processors according to the anticipated processing requirements of the tasks. For example, a processor intensive task such as, for example, performing an FFT, would be directed to the more powerful processor while a less processor intensive task would be directed to the less powerful processor.
The invention relates to a method for sharing a wireless communications module between a primary processor system and a secondary processor system of a computer system architecture according to claim 1, an apparatus according to independent claim 14, a machine-executable program according to independent claim 28 and a machine-readable storage according to independent claim 29. Further embodiments are defined in the dependent claims.

### BRIEF DESCRIPTION OF THE DRAWING

The accompanying drawings, which are included as part of the present specification, illustrate the presently preferred embodiment of the present invention and together with the general description given above and the detailed description of the preferred embodiment given below serve to explain and teach the principles of the present invention.

Figure 1A illustrates an embodiment, of a mobile computing system.

Figure 1B illustrates a prior art wireless network.

Figure 2 illustrates an exemplary diagram of a GPRS system according to one embodiment of the present invention.

Figure 3 illustrates an exemplary diagram of a GPRS system, according to another embodiment of the present invention.

Figure 4 illustrates an exemplary multi processor computer system architecture, according to one embodiment of the present invention.

Figure 5 illustrates an exemplary multi-processor computer system architecture, according to another embodiment of the present invention.

Figure 6 illustrates an exemplary detailed diagram of a multiprocessor system for sharing GPRS. peripherals according to one embodiment of the present invention.

Figure 7 illustrates an exemplary detailed diagram of a multiprocessor system, for sharing a GPRS peripheral according to another embodiment of the present invention.

Figure 8 illustrates an exemplary flow diagram of a method performed for sharing a GPRS peripheral, according to one embodiment of the present invention.

### DETAILED DESCRIPTION

In the following description, for purposes of explanation, specific nomenclature is set forth to provide a thorough understanding of the present invention. However, it will be apparent to one skilled in the art that these specific details are not required in order to practice the present invention.

Some portions of the detailed descriptions that follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present invention also relates to apparatus for performing the operations herein. This apparatus may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, and each coupled to a computer system bus.

The algorithms and displays presented herein are not inherently related to any particular computer or other apparatus. Various general-purpose systems may be used with programs in accordance with the teachings herein, or it may prove convenient to construct more specialized apparatus to perform the required method steps. The required structure for a variety of these systems will appear from the description below.

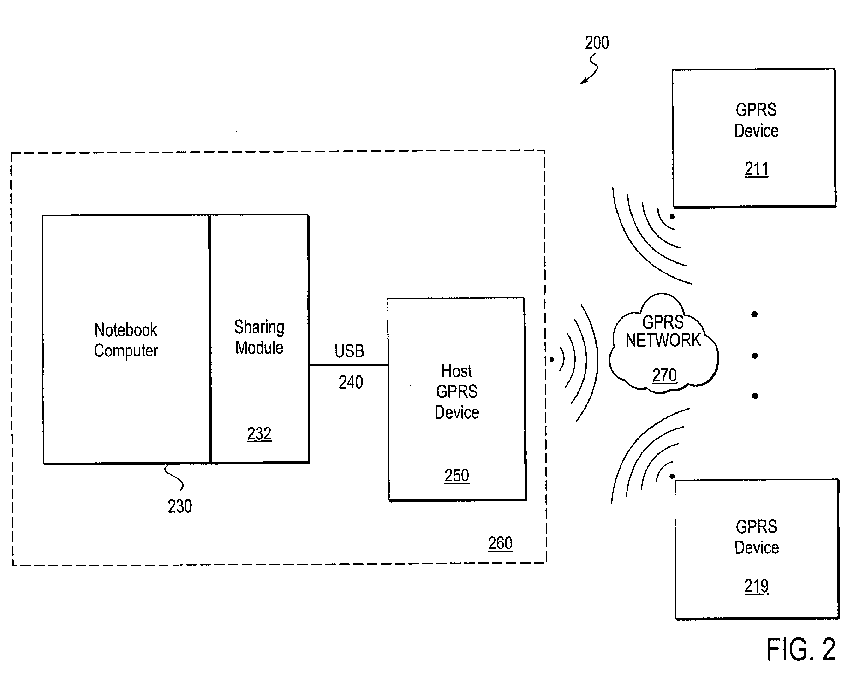

Figure 2 illustrates an exemplary diagram of a GPRS system 200 according to one embodiment of the present invention. System 200 includes a computer system 230 connected to a host GPRS computing device 250 via USB cable 240. Computer system 230 is not GPRS enabled. Device 250 can be any multi-function GPRS enabled device such as a mobile phone or PDA.

Computer 230 includes a GPRS sharing module 232 that allows the computer 230 to control the GPRS functionality of host device 250. In other words, the non-GPRS enabled computer 230 becomes a GPRS enabled computer 260 that communicates with GPRS devices 211-219 via GPRS network 270. Sharing module 232 includes software drivers that allow both the processor in computer 230 and in the processor in host device 250 to control the GPRS functionality of host device 250. Although USB cable 240 is shown in Figure 2, the link can also be an RS-232 cable, firewire or similar high-speed link. In another embodiment, sharing module 232 is included in host device 250. Additionally, sharing module 232 can stand-alone with interfaces to both computer 230 and host device 250.

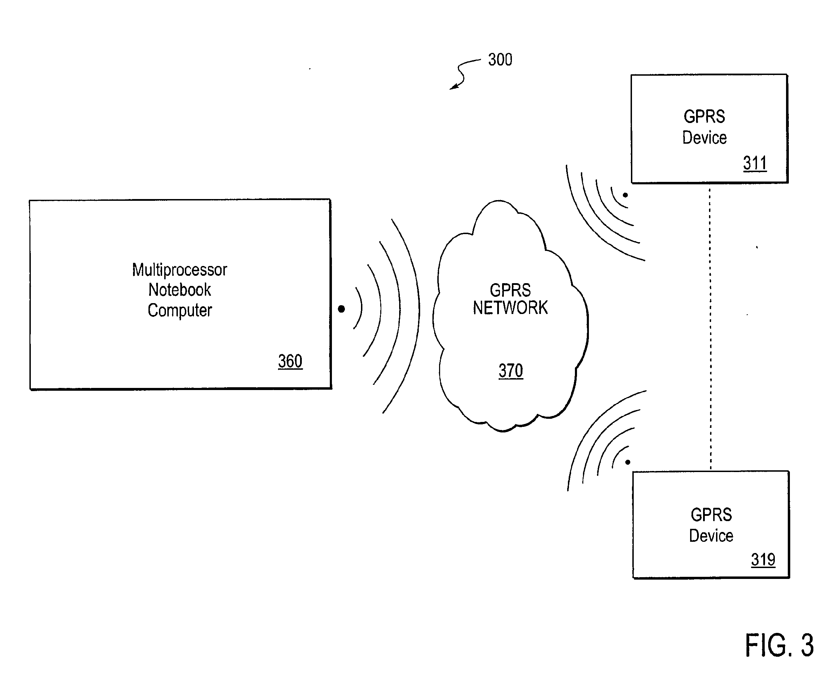

Figure 3 illustrates an exemplary diagram of a GPRS system 300, according to another embodiment of the present invention. GPRS system 300 includes a multiprocessor computer 360 that communicates with GPRS devices 311-319 via GPRS network 370. Multiprocessor computer 360 can operate in various states. Computing system 360 has three primary states where useful tasks can be performed: 1) a high power, "normal on" state; 2) a "main CPU/OS based low power" state; and, 3) a "non main CPU/OS based low power" state.

The "normal on" state corresponds to a standard "normal on" state in which the computing system is operational and all of its primary architectural components are powered on. As a consequence, the computing system can be viewed as being within a "high power" state because its primary architectural components are consuming power.

The "main CPU/OS based low power" state corresponds to a state in which the main CPU is powered on and can execute software; yet, primary architectural components (notably, the graphics controller, the display, and various I/O units are powered down so that power consumption is reduced. Moreover, the main CPU itself, although functional, may be configured so as to have reduced performance and reduced power consumption as compared to the normal on state. In an embodiment, this is achieved at least by lowering the frequency of the main CPU's clock speed as compared to the formal on" state, As a consequence, the main CPU has reduced processing speed, but, consumes less power.

The "non main CPU/OS based lower power" state corresponds to a state in which the main CPU is powered down so that it cannot execute software based upon the computing system's main OS. Note that the cache, the system memory, and at least the memory controller portion of the memory controller and bridge unit may also be powered down (because they largely support the main CPU's effort to execute software).

In lower power state, wireless I/O is still powered on. Wireless I/O can use many long and/or short-range protocols, One long-range wireless standard that is in the process of being embraced is preliminarily known by the name of "GPRS." General Packet Radio Services (GPRS) is a packet-based wireless communication service that promises data rates from 56 up to 114 Kbps and continuous connection to the Internet for mobile phone and computer users. The higher data rates will allow users to take part in video conferences and interact with multimedia. Web sites and similar applications using mobile handheld devices as well as notebook computers. GPRS. is based on Global System for Mobile (GSM) communication and will complement existing service such as circuit-switched cellular phone connections and the Short Message Service (SMS).

In theory, GPRS packet-based service should cost users less than circuit-switched services since communication channels are being used on a shared-use, as-packets-are-needed basis rather than dedicated only to one user at a time. It should also be easier to make applications available to mobile users because the faster data rate means that middleware currently needed to adapt applications to the slower speed of wireless systems will no longer be needed, As GPRS becomes available, mobile users of a virtual private network (VPN) will be able to access the private network continuously rather than trough a dial-up connection.

GPRS will also complement Bluetooth, a standard for replacing wired connections between devices with wireless radio connections, in addition to the Internet Protocol (IP), GPRS. supports X.25, a packet-based protocol that is used mainly in Europe. GPRS is an evolutionary step toward Enhanced Data. GSM Environment (EDGE) and Universal Mobile Telephone Service (UMTS).

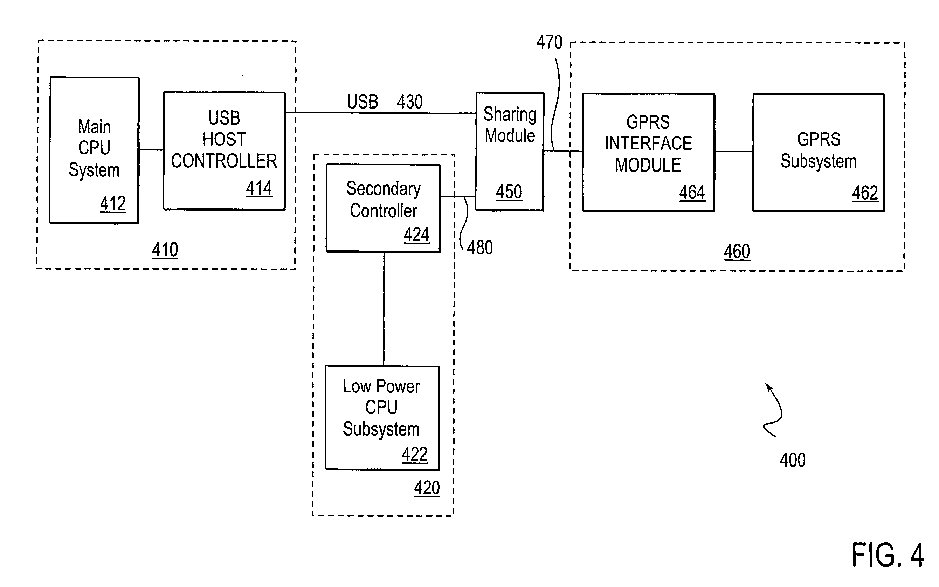

Figure 4 illustrates an exemplary multi processor computer system architecture 400, according to one embodiment of the present invention. Multiprocessor system 400 includes main processing module 410 that includes USB host controller 414 and main CPU system 412. Main CPU subsystem 412 can include Pentium,^{™} Celleron^{™} or similar a multi-function IA32 microprocessors. Main CPU subsystem 412 can use the Windows^{™} operating system. Main processing module 410 is connected to sharing module 450 via USB link 430 according to one embodiment. Additionally, main processing module functions in a high power state and a main CPU/OS based low power state described above.

Multi-processor system 400 also includes a secondary processing module 420 that includes a secondly controller 424 and low power CPU subsystem 422. Low power CPU Subsystem. 422 can include Xscale^{™} or similar low power microprocessors, Low power CPU subsystem 422 can use the Windows CE^{™} operating system PALM^{™} operating system, or similar operating system. Secondary controller 424 is connected to sharing module 450 via a Universal Asynchronous Receiver/Transmitter (UART) interface 480, according to one embodiment. Additionally, subsystem 422 can operate in all three states above, but would only be a master of the GPRS module 460, while multi-processor system 400 is in a lower power state, as described above.

Multi-processor system includes sharing module 450, as described above, that allows for main processing module 410 and secondary system 420 to share GPRS module 460. Sharing module translater packets in formats of main processing system 420 and secondary system 420, into modes used by GPRS module 460. Additionally, sharing module 450 presents GPRS module 460 as a peripheral slave device to both main system 410 and secondary system 420. Sharing module 450 also functions as a switch to determine whether main system 410 or secondary system 420 should control the GPRS. module 460 based on the overall power state of multiprocessor computer system 400. The switching decisions are made by sharing module 450 for numerous reasons. For example, the switch can occur when the notebook computer's lid is opened or closed; or if the computer receives a data message (e-mail, SMS, MMS, et.). The switching is performed seamlessly. GPRS. module 460 includes a GPRS interface module 464 and a GPRS subsystem 462. The GPRS module 460 is a standard GPRS radio module.

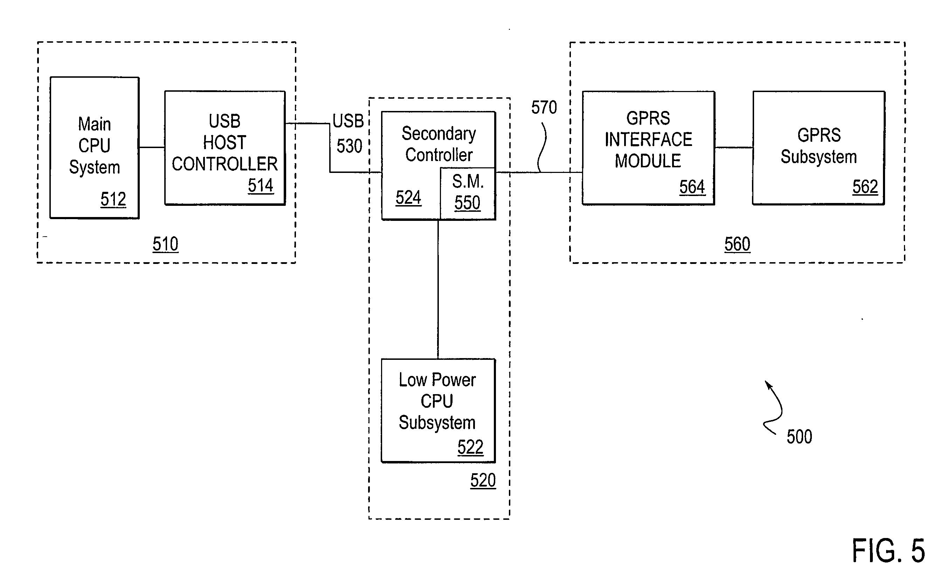

Figure 5 illustrates an exemplary multiprocessor computer systems architecture 500, according to another embodiment of the present invention. Main processor system 510 includes main CPU system 512 and USB host controller 514. Multiprocessor system 500 integrates sharing module 550 into secondary controller 524 of secondary processing system 520.

GPRS module 560 includes both a GPRS. interface module 564 and subsystem 562. Secondary controller 524 interfaces with both GPRS module 560 and main processor system 510. The interface with main processor system 510 is USB 530 and the interface with GPRS module is UART 570. Secondary controller 524 can be active in all power states of multiprocessor system 500. While in high power state, and low power main CPU/OS on states, secondary controller acts power state is entered, low power subsystem 522 acts as a master, to control GPRS module 560.

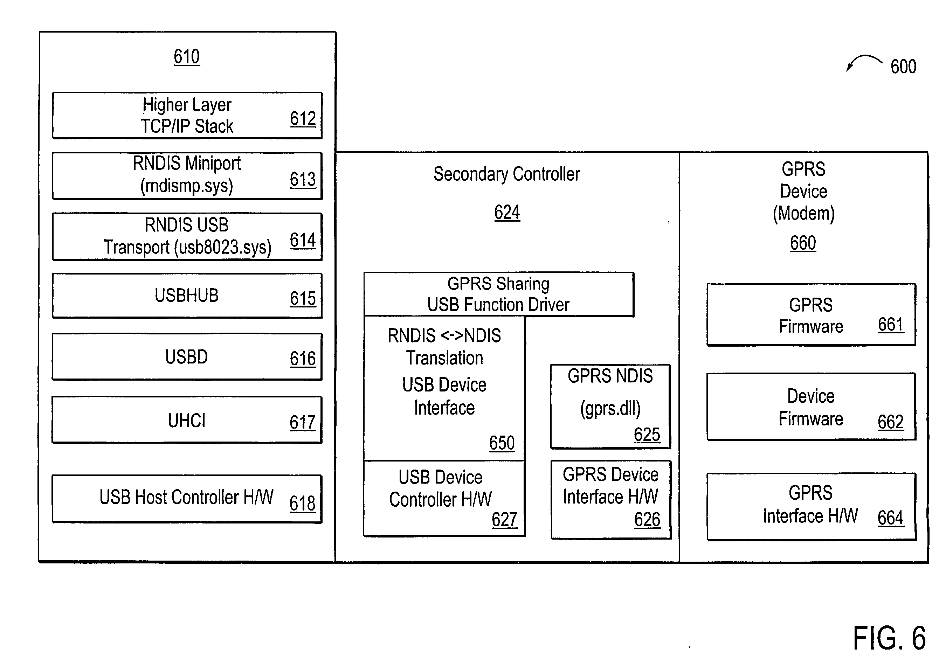

**Figure 6** illustrates an exemplary detailed diagram of a multiprocessor system 600 for sharing GPRS peripherals, according to one embodiment of the present invention. Main processor system 610 includes USB host controller hardware 618, which communicates with secondary system's USB device controller hardware 627. Main system 610 also includes standard USB host controller interface (UHCI) 617, USB driver (USBD) 616, and USB hub 615. System 610 also includes a miniport driver for the remote network driver interface software (RNDIS) 613, and a miniport driver for the Remote NDIS using the USB bus. The operating system can be Windows^{™}, Linux or similar operating system.

Secondary controller 624 includes USB device controller hardware 627 to interface with USB host controller 618, as well as GPRS device interface hardware 626 to interface with GPRS interface hardware 664. Secondary controller 624 provides a GPRS NDIS driver 625 and a sharing USB Function driver 650. The sharing driver 650 translates RNDIS descriptors to NDIS descriptors, as well as provides a USB driver, for use by hardware 627. Driver 650 extends USB descriptor configuration to support proprietary data communication applications. GPRS interface module 660 includes GPRS firmware 661, GPRS device firmware 662 and a GPRS interface hardware controller 664. There is more than just transport mode conversion here. The main processor system 610 treats GPRS device 660 as a Remote NDIS (network) type device while the secondary processor system treats it like a wireless network device. In one embodiment, the conversion is from a generic remote network type device to a wireless network type device. Translation state management is performed by driver 750. The transport mode conversion (if appropriate) is in addition to the network device type conversion, mapping, and/or translation.

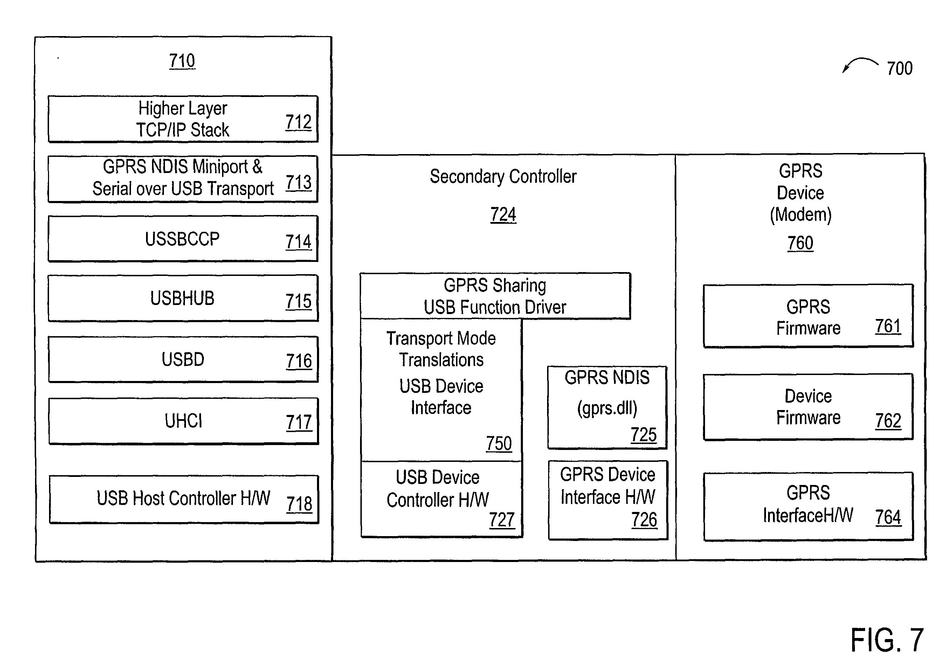

**Figure 7** illustrates an exemplary detailed diagram of a multiprocessor system 700 for sharing GPRS peripherals, according to another embodiment of the present invention. Main processor system 710 includes USB host controller hardware 718, which communicates with secondary system's USB device controller hardware 727. Main system 710 also includes standard USB host controller interface (UHCI) 717, USB driver (USBD) 716, USB hub (USBH) 715, and USB composite class protocol driver (USBCCP) 714 that enumerates other USB device classes in a composite device. System 710 also includes a miniport driver for the remote network driver interface software (RNDIS) and a serial over USB driver 713. The operating system can be Windows^{™} Linux or similar operating system.

Secondary controller 724 includes USB device controller hardware 727 to interface with USB host controller 718, as well as GPRS device interface hardware 726 to interlace with GPRS interface hardware 764. Secondary controller 724 provides a GPRS. NDIS driver 725 and a sharing USB Function driver 750. The sharing driver 750 provides transport mode translations, as well as provides a USB driver, for use by hardware 727. Driver 750 extends USB descriptor configuration to support proprietary data communication applications. GPRS interface module 760 includes GPRS firmware 761, GPRS device firmware 762 and a GPRS interface hardware controller 764. There is more than just transport mode conversion here. The main processor system 710 treats GPRS device 760 as a Remote NDIS (network) type device while the secondary processor system treats it like a wireless network device. In one embodiment, the wireless GPRS NDIS level packet is passed from main processor system 710 to secondary system's controller 724 without translation. However, transport mode conversion can be performed in addition to the network device type conversion, mapping, and/or translation. Thus, there is no translation state management required by driver 750.

The embodiment of Figures 6 and 7 do not necessitate any changes to the main processor's 610 operating system. Non is there a dependency on proprietary drivers, or effect on application functionality run on main system 610. Higher layer GPRS (TCP/IP stack 612) components remain unchanged as well

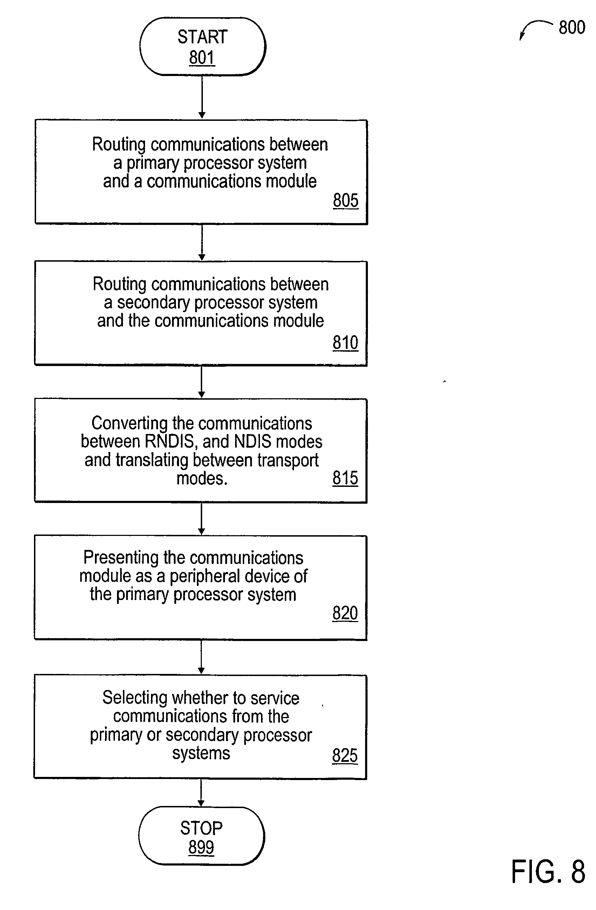

Figure 8 illustrates an exemplary flow diagram 800 of a method performed for sharing a GPRS. peripheral, according to one embodiment, of the present invention, The process commences at block 801. At processing block 805, the sharing module routes communications between a primary processor system and a GPRS communication module. At processing block 810, the sharing module routes communications between a secondary processor system and the GPRS. module.

The communications packets are processed to properly translate transport modes and between RNDIS and NDIS; at processing block 815, if necessary. At processing block 820, the GPRS module is presented to the main processing system as a USB peripheral device. The sharing module also selects and switches control of the GPRS module between the main processor system and secondary system based on the overall power state of the multiprocessor computer system.

A method and apparatus for sharing a GPRS module with two computing devices is disclosed. Although the present invention has been described with respect to specific examples and subsystems, it will be apparent to those of ordinary skill in the art that the invention is not limited to these specific examples or subsystems but extends to other embodiments as well. The present invention includes the embodiments as specified in the claims that follow.

## Claims

1. A method of sharing a wireless communications module (460) between a primary processor system (410) and a secondary processor system (420) of a computer system architecture; the primary processor system (410) having a higher performance relative to the secondary processor system (420) and the computer system architecture comprising a plurality of overall power states according to power states of the primary and secondary processor systems; said overall power states comprising a power on state in which the primary processor system is powered on, and a lower power state in which the primary processor system is powered down; the method being **characterised by**
sharing said wireless communications module; said sharing comprising selecting the primary processor system to be master of the wireless communications module in the power on state, and selecting the secondary processor system to be the master of the wireless communications module in the low power state.

2. The method of claim 1, wherein sharing comprises:
routing wireless communications between the primary processor system (410) and the wireless communications module (460) via a sharing module (450); and
routing wireless communications between the secondary processor system (420) and the wireless communications module (460) via the sharing module (450).

3. The method of claim 2, wherein sharing further comprises:
presenting the wireless communications module (460) as a slave device; and
presenting the primary processor system (410) and secondary processor system (420) as master devices to the wireless communications module (460).

4. The method of claim 2, wherein sharing further comprises:
translating all wireless packets between a first transport mode and a second transport mode.

5. The method of claim 4, wherein the first transport mode includes a universal serial bus (USB), an RS-232 connection, Firewire, and mPCI; and
wherein the second transport mode includes a universal serial bus (USB), an RS-232 connection, Firewire, and mPCI.

6. The method of claim 2, wherein the sharing module (450), the primary processor system (410) and the secondary processor system (420) are included in a notebook computer, and wherein the wireless communications module (460) is a GPRS communications module.

7. The method of claim 5, wherein the sharing module (450) is integrated into the secondary processor system (420); and
wherein the secondary processor system (420) is a low-power computer system and the primary processor system (410) is a main CPU/OS computer system.

8. The method of claim 5, wherein the sharing module (450) is integrated into the secondary processor system (420), and the secondary processor system (420) is included in a multi-function GPRS enabled device; and
wherein the primary processor system (410) is included in a notebook, a tablet, a laptop, and a desktop computer system.

9. The method of claim 8, wherein the sharing module (450) is integrated with a secondary controller of the secondary processor system (420).

10. The method of claim 5, wherein the sharing module (450) is included in the primary processor system (410).

11. The method of claim 2, wherein the GPRS module communicates with one or more secondary GPRS devices via a GPRS network.

12. The method of claim 2, wherein the sharing module (450) communicates with a USB host controller and a GPRS module.

13. The method of claim 2, further comprising switching control between the primary processor system (410) and secondary processor system (420), upon the occurrence of an event, wherein the event includes opening of a computer lid, receiving a data message by the primary processor system (410), receiving a data message by the secondary processor system (420), closing a computer lid, and receiving a switch command.

14. An apparatus, comprising:
a sharing module (450);
a wireless communications module connected to the sharing module (450);
a primary processor system (410) connected to the sharing module (450);
and a secondary processor system (420) connected to the sharing module (450),
the sharing module (450) comprising means configured to allow the primary processor system (410) and secondary processor system (420) to share a host controller of the wireless communications module, said means including means to select the primary processor system to be master of the wireless communications module when a power state of the apparatus is a power on state in which the primary processor system is powered on, and select the secondary processor system to be the master of the wireless communications module when the powder state is a low power state in which the primary processor system is powered down.

15. The apparatus of claim 14, wherein the sharing module (450) is adapted to
route wireless communications between the primary processor system (410) and the wireless communications module (450); and
route wireless communications between the secondary processor system (420) and the wireless communications module (450).

16. The apparatus of claim 15, wherein the sharing module (450) is adapted to present the wireless communications module as a slave device; and
present the primary processor system (410) and secondary processor system (420) as master devices to the wireless communications module.

17. The apparatus of claim 15, wherein the sharing module (450) is adapted to select whether to service wireless communications either of the primary processor system (410) or the secondary processor system (420).

18. The apparatus of claim 15, wherein the sharing module (450) is adapted to translate all packets between a first transport mode and a second transport mode.

19. The apparatus of claim 18, wherein the first transport mode includes a universal serial bus (USB), an RS-232 connection, Firewire, and mPCI; and
wherein the second transport mode includes a universal serial bus (USB), an RS-232 connection, Firewire, and mPCI.

20. The apparatus of claim 14, wherein the apparatus comprises a notebook computer.

21. The apparatus of claim 14, wherein the sharing module (450) is integrated into the secondary processor system (420); and
wherein the secondary processor system (420) is a low-power computer system and the primary processor system (410) is a main CPU/OS computer system.

22. The apparatus of claim 14, wherein the sharing module (450) is integrated into the secondary processor system (420), and the secondary processor system (420) is included in a multi-function GPRS enabled device; and
wherein the primary processor system (410) is included in a notebook, a tablet, a laptop, and a desktop computer system.

23. The apparatus of claim 22, wherein the sharing module (450) is integrated with a secondary controller of the secondary processor system (420).

24. The apparatus of claim 14, wherein the sharing module (450) is included in the primary processor system (410).

25. The apparatus of claim 14, wherein the wireless communications module is adapted to communicate with one or more secondary GPRS devices via a GPRS network.

26. The apparatus of claim 14, wherein the sharing module (450) is adapted to communicate with a USB host controller and a GPRS module.

27. The apparatus of claim 14, wherein the sharing module (450) is adapted to switch control of the wireless communications module between the primary processor system (410) and secondary processor system (420), upon the occurrence of an event, wherein the event includes opening of a computer lid, receiving a data message by the first processor system, receiving a data message by the second processor system, closing a computer lid, and receiving a switch command.

28. A machine-executable program comprising instructions adapted, when executed, to perform the method as claimed in any of claims 1-13.

29. Machine-readable storage storing a program as claimed in claim 28.

## Patentansprüche

1. Verfahren für die gemeinsame Nutzung eines drahtlosen Kommunikationsmoduls (460) durch ein primäres Prozessorsystem (410) und ein sekundäres Prozessorsystem (420) einer Computersystemarchitektur; wobei das primäre Prozessorsystem (410) eine höhere Leistung aufweist als das sekundäre Prozessorsystem (420), und wobei die Computersystemarchitektur eine Mehrzahl von Leistungszuständen insgesamt gemäß den Leistungszuständen der primären und sekundären Prozessorsysteme umfasst; wobei die genannten Leistungszustände insgesamt einen Einschaltzustand umfassen, in dem das primäre Prozessorsystem eingeschaltet ist, und einen niedrigen Leistungszustand, in dem das primäre Prozessorsystem ausgeschaltet ist; wobei das Verfahren **gekennzeichnet ist durch**:
das gemeinsame Nutzen des genannten drahtlosen Kommunikationsmoduls; wobei das genannte gemeinsame Nutzen das Auswählen des primären Prozessorsystems als Master des drahtlosen Kommunikationsmoduls in dem Einschaltzustand umfasst, und das Auswählen des sekundären Prozessorsystems als Master des drahtlosen Kommunikationssystems in dem niedrigen Einschaltzustand.

2. Verfahren nach Anspruch 1, wobei das gemeinsame Nutzen folgendes umfasst:
das Weiterleiten drahtloser Kommunikationen zwischen dem primären Prozessorsystem (410) und dem drahtlosen Kommunikationsmodul (460) über ein Sharing-Modul (450); und
das Weiterleiten drahtloser Kommunikationen zwischen dem sekundären Prozessorsystem (420) und dem drahtlosen Kommunikationsmodul (460) über das Sharing-Modul (450).

3. Verfahren nach Anspruch 2, wobei das gemeinsame Nutzen ferner folgendes umfasst:
das Präsentieren des drahtlosen Kommunikationsmoduls (460) als eine Slave-Vorrichtung; und
das Präsentieren des primären Prozessorsystems (410) und des sekundären Prozessorsystems (420) als Master-Vorrichtungen für das drahtlose Kommunikationsmodul (460).

4. Verfahren nach Anspruch 2, wobei das gemeinsame Nutzen ferner folgendes umfasst:
das Übersetzen aller Funkpakete zwischen einem ersten Transportmodus und einem zweiten Transportmodus.

5. Verfahren nach Anspruch 4, wobei der erste Transportmodus einen Universal Serial Bus (USB), eine RS-232-Verbindung, Firewire und mPCI umfasst; und
wobei der zweite Transportmodus einen Universal Serial Bus (USB), eine RS-232-Verbindung, Firewire und mPCI umfasst.

6. Verfahren nach Anspruch 2, wobei das Sharing-Modul (450), das primäre Prozessorsystem (410) und das sekundäre Prozessorsystem (420) in einem Notebook-Computer enthalten sind, und wobei es sich bei dem drahtlosen Kommunikationsmodul (460) um ein GPRS-Kommunikationsmodul handelt.

7. Verfahren nach Anspruch 5, wobei das Sharing-Modul (450) in das sekundäre Prozessorsystem (420) integriert ist; und
wobei es sich bei dem sekundären Prozessorsystem (420) um ein leistungsarmes Computersystem handelt, und wobei es sich bei dem primären Computersystem (410) um ein Haupt-CPU/OS-Computersystem handelt.

8. Verfahren nach Anspruch 5, wobei das Sharing-Modul (450) in das sekundäre Prozessorsystem (420) integriert ist, und wobei das sekundäre Prozessorsystem (420) in einer multifunktionalen GPRS-fähigen Vorrichtung enthalten ist; und
wobei das primäre Prozessorsystem (410) in einem Notebook-, einem Tablet-, einem Laptop- und einem Desktop-Computersystem enthalten ist.

9. Verfahren nach Anspruch 8, wobei das Sharing-Modul (450) integriert mit einer sekundären Steuereinheit des sekundären Prozessorsystems (420) vorgesehen ist.

10. Verfahren nach Anspruch 5, wobei das Sharing-Modul (450) in dem primären Prozessorsystem (410) enthalten ist.

11. Verfahren nach Anspruch 2, wobei das GPRS-Modul über ein GPRS-Netzwerk mit einer oder mehreren sekundären GPRS-Vorrichtungen kommuniziert.

12. Verfahren nach Anspruch 2, wobei das Sharing-Modul (450) mit einem USB-Host-Controller und einem GPRS-Modul kommuniziert.

13. Verfahren nach Anspruch 2, wobei das Verfahren ferner beim Eintreten eines Ereignisses eine wechselnde Steuerung zwischen dem primären Prozessorsystem (410) und dem sekundären Prozessorsystem (420) umfasst, wobei das Ereignis das Öffnen einer Computerabdeckung, das Empfangen einer Datennachricht durch das primäre Prozessorsystem (410), das Empfangen einer Datennachricht durch das sekundäre Prozessorsystem (420), das Schließen einer Computerabdeckung und das Empfangen eines Umschaltbefehls umfasst.

14. Vorrichtung, die folgendes umfasst:
ein Sharing-Modul (450);
ein drahtloses Kommunikationsmodul, das mit dem Sharing-Modul (450) verbunden ist;
ein primäres Prozessorsystem (410), das mit dem Sharing-Modul (450) verbunden ist;
und ein sekundäres Prozessorsystem (420), das mit dem Sharing-Modul (450) verbunden ist,
wobei das Sharing-Modul (450) eine Einrichtung umfasst, die so konfiguriert ist, dass sie es ermöglicht, dass das primäre Prozessorsystem (410) und das sekundäre Prozessorsystem (420) einen Host-Controller des drahtlosen Kommunikationsmoduls gemeinsam nutzen, wobei die genannte Einrichtung eine Einrichtung zur Auswahl des primären Prozessorsystems als Master des drahtlosen Kommunikationsmoduls aufweist, wenn es sich bei einem Leistungszustand der Vorrichtung um einen Einschaltzustand handelt, in dem das primäre Prozessorsystem eingeschaltet ist, und zur Auswahl des sekundären Prozessorsystems als Master des drahtlosen Kommunikationsmoduls, wenn es sich bei dem Leistungszustand um einen niedrigen Leistungszustand handelt, in dem das primäre Prozessorsystem ausgeschaltet ist.

15. Vorrichtung nach Anspruch 14, wobei das Sharing-Modul (450) in der Lage ist, drahtlose Kommunikationen zwischen dem primären Prozessorsystem (410) und dem drahtlosen Kommunikationsmodul (450) weiterzuleiten; und
drahtlose Kommunikationen zwischen dem sekundären Prozessorsystem (420) und dem drahtlosen Kommunikationsmodul (450) weiterzuleiten.

16. Vorrichtung nach Anspruch 15, wobei das Sharing-Modul (450) in der Lage ist, das drahtlose Kommunikationsmodul als Slave-Vorrichtung zu präsentieren; und
das primäre Prozessorsystem (410) und das sekundäre Prozessorsystem (420) als Master-Vorrichtungen für das drahtlose Kommunikationsmodul zu präsentieren.

17. Vorrichtung nach Anspruch 15, wobei das Sharing-Modul (450) in der Lage ist, auszuwählen, ob drahtlose Kommunikationen des primären Prozessorsystems (410) oder des sekundären Prozessorsystems (420) bedient werden sollen.

18. Vorrichtung nach Anspruch 15, wobei das Sharing-Modul (450) in der Lage ist, alle Pakete zwischen einem ersten Transportmodus und einem zweiten Transportmodus zu übersetzen.

19. Vorrichtung nach Anspruch 18, wobei der erste Transportmodus einen Universal Serial Bus (USB), eine RS-232-Verbindung, Firewire und mPCI umfasst; und
wobei der zweite Transportmodus einen Universal Serial Bus (USB), eine RS-232-Verbindung, Firewire und mPCI umfasst.

20. Vorrichtung nach Anspruch 14, wobei die Vorrichtung einen Notebook-Computer umfasst.

21. Vorrichtung nach Anspruch 14, wobei das Sharing-Modul (450) in das zweite Prozessorsystem (420) integriert ist; und
wobei es sich bei dem sekundären Prozessorsystem (420) um ein leistungsarmes Computersystem handelt, und wobei es sich bei dem primären Computersystem (410) um ein Haupt-CPU/OS-Computersystem handelt.

22. Vorrichtung nach Anspruch 14, wobei das Sharing-Modul (450) in das sekundäre Prozessorsystem (420) integriert ist, und wobei das sekundäre Prozessorsystem (420) in einer multifunktionalen GPRS-fähigen Vorrichtung enthalten ist; und
wobei das primäre Prozessorsystem (410) in einem Notebook-, einem Tablet-, einem Laptop- und einem Desktop-Computersystem enthalten ist.

23. Vorrichtung nach Anspruch 22, wobei das Sharing-Modul (450) integriert mit einer sekundären Steuereinheit des sekundären Prozessorsystems (420) vorgesehen ist.

24. Vorrichtung nach Anspruch 22, wobei das Sharing-Modul (450) in dem primären Prozessorsystem (410) enthalten ist.

25. Vorrichtung nach Anspruch 14, wobei das drahtlose Kommunikationsmodul über ein GPRS-Netzwerk mit einer oder mehreren sekundären GPRS-Vorrichtungen kommunizieren kann.

26. Vorrichtung nach Anspruch 14, wobei das Sharing-Modul (450) mit einem USB-Host-Controller und einem GPRS-Modul kommunizieren kann.

27. Vorrichtung nach Anspruch 14, wobei das Sharing-Modul (450) in der Lage ist, beim Eintreten eines Ereignisses die Steuerung des drahtlosen Kommunikationsmoduls zwischen dem primären Prozessorsystem (410) und dem sekundären Prozessorsystem (420) zu wechseln, wobei das Ereignis das Öffnen einer Computerabdeckung, das Empfangen einer Datennachricht durch das primäre Prozessorsystem (410), das Empfangen einer Datennachricht durch das sekundäre Prozessorsystem (420), das Schließen einer Computerabdeckung und das Empfangen eines Umschaltbefehls umfasst.

28. Maschinenausführbares Programm, das Befehle umfasst, die, wenn sie ausgeführt werden, in der Lage sind, das Verfahren in einem der Ansprüche 1 bis 13 beanspruchte Verfahren auszuführen.

29. Maschinenlesbarer Speicher, der ein Programm nach Anspruch 28 speichert.

## Revendications

1. Méthode de partage d'un module de communications sans fil (460) entre un système de processeur primaire (410) et un système de processeur secondaire (420) d'une architecture de système informatique ; le système de processeur primaire (410) ayant une performance supérieure par rapport au système de processeur secondaire (420) et l'architecture de système informatique comprenant une pluralité d'états d'alimentation globale selon les états d'alimentation des systèmes de processeur primaire et secondaire ; lesdits états d'alimentation globale comprenant un état sous tension dans lequel le système de processeur primaire est alimenté, et un état de faible puissance dans lequel le système de processeur primaire n'est pas alimenté ; le procédé étant **caractérisé en ce qu'**il comprend l'étape consistant à :
partager ledit module de communications sans fil ; ledit partage comprenant les étapes consistant à sélectionner le système de processeur primaire pour être le maître du module de communications sans fil à l'état sous tension, et à sélectionner le système de processeur secondaire pour être le maître du module de communications sans fil à l'état de faible puissance.

2. Procédé selon la revendication 1, dans lequel le partage comprend les étapes consistant à :
router les communications sans fil entre le système de processeur primaire (410) et le module de communications sans fil (460) via un module de partage (450) ; et
router les communications sans fil entre le système de processeur secondaire (420) et le module de communications sans fil (460) via un module de partage (450).

3. Procédé selon la revendication 2, dans lequel le partage comprend en outre les étapes consistant à :
présenter le module de communications sans fil (460) comme dispositif esclave ; et
présenter le système de processeur primaire (410) et le système de processeur secondaire (420) comme dispositifs maîtres au module de communications sans fil (460).

4. Procédé selon la revendication 2, dans lequel le partage comprend en outre l'étape consistant à :
translater tous les paquets sans fil entre un premier mode de transport et un second mode de transport.

5. Procédé selon la revendication 4, dans lequel le premier mode de transport comprend un bus série universel (USB), une connexion RS-232, Firewire et mPCI ; et
dans lequel le second mode de transport comprend un bus série universel (USB), une connexion RS-232, Firewire et mPCI.

6. Procédé selon la revendication 2, dans lequel le module de partage (450), le système de processeur primaire (410) et le système de processeur secondaire (420) sont inclus dans un ordinateur bloc-notes, et dans lequel le module de communications sans fil (460) est un module de communications GPRS.

7. Procédé selon la revendication 5, dans lequel le module de partage (450) est intégré dans le système de processeur secondaire (420) ; et
dans lequel le système de processeur secondaire (420) est un système informatique à basse puissance et le système de processeur primaire (410) est un système informatique CPU/OS principal.

8. Procédé selon la revendication 5, dans lequel le module de partage (450) est intégré dans le système de processeur secondaire (420) et le système de processeur secondaire (420) est inclus dans un dispositif activé GPRS multifonction ; et
dans lequel le système de processeur primaire (410) est inclus dans un ordinateur bloc-notes, une tablette électronique, un ordinateur portable et un système informatique de bureau.

9. Procédé selon la revendication 8, dans lequel le module de partage (450) est intégré avec un contrôleur secondaire du système de processeur secondaire (420).

10. Procédé selon la revendication 5, dans lequel le module de partage (450) est inclus dans le système de processeur primaire (410).

11. Procédé selon la revendication 2, dans lequel le module GPRS communique avec un ou plusieurs dispositifs GPRS secondaires via un réseau GPRS.

12. Procédé selon la revendication 2, dans lequel le module de partage (450) communique avec un contrôleur hôte USB et un module GPRS.

13. Procédé selon la revendication 2, comprenant en outre l'étape consistant à commuter la commande entre le système de processeur primaire (410) et le système de processeur secondaire (420), lors de la survenance d'un événement, dans lequel l'événement inclut l'ouverture d'un couvercle d'ordinateur, la réception d'un message de données par le système de processeur primaire (410), la réception d'un message de données par le système de processeur secondaire (420), la fermeture d'un couvercle d'ordinateur et la réception d'une commande de commutation.

14. Appareil comprenant :
un module de partage (450)
un module de communications sans fil connecté au module de partage (450) ;
un système de processeur primaire (410) connecté au module de partage (450) ; et
un système de processeur secondaire (420) connecté au module de partage (450), le module de partage (450) comprenant des moyens configurés pour permettre au système de processeur primaire (410) et au système de processeur secondaire (420) de partager un contrôleur hôte du module de communications sans fil, lesdits moyens comprenant des moyens pour sélectionner le système de processeur primaire pour être le maître du module de communications sans fil lorsqu'un état d'alimentation de l'appareil est un état sous tension dans lequel le système de processeur primaire est alimenté, et à sélectionner le système de processeur secondaire pour être le maître du module de communications sans fil lorsque l'état d'alimentation est un état de faible puissance dans lequel le système de processeur primaire n'est pas alimenté.

15. Appareil selon la revendication 14, dans lequel le module de partage (450) est adapté pour
router les communications sans fil entre le système de processeur primaire (410) et le module de communications sans fil (460) ; et
router les communications sans fil entre le système de processeur secondaire (420) et le module de communications sans fil (460).

16. Appareil selon la revendication 15, dans lequel le module de partage (450) est adapté pour
présenter le module de communications sans fil comme dispositif esclave ; et
présenter le système de processeur primaire (410) et le système de processeur secondaire (420) comme dispositifs maîtres au module de communications sans fil.

17. Appareil selon la revendication 15, dans lequel le module de partage (450) est adapté pour choisir de traiter les communications sans fil du système de processeur primaire (410) ou du système de processeur secondaire (420).

18. Appareil selon la revendication 15, dans lequel le module de partage (450) est adapté pour translater tous les paquets sans fil entre un premier mode de transport et un second mode de transport.

19. Appareil selon la revendication 18, dans lequel le premier mode de transport comprend un bus série universel (USB), une connexion RS-232, Firewire et mPCI ; et
dans lequel le second mode de transport comprend un bus série universel (USB), une connexion RS-232, Firewire et mPCI.

20. Appareil selon la revendication 14, dans lequel l'appareil comprend un ordinateur bloc-notes.

21. Appareil selon la revendication 14, dans lequel le module de partage (450) est intégré dans le système de processeur secondaire (420) ; et dans lequel le système de processeur secondaire (420) est un système informatique à faible puissance et le système de processeur primaire (410) est un système informatique CPU/OS principal.

22. Appareil selon la revendication 5, dans lequel le module de partage (450) est intégré dans le système de processeur secondaire (420) et le système de processeur secondaire (420) est inclus dans un dispositif activé CPRS multifonction ; et
dans lequel le système de processeur primaire (410) est inclus dans un ordinateur bloc-notes, une tablette électronique, un ordinateur portable et un système informatique de bureau.

23. Appareil selon la revendication 22, dans lequel le module de partage (450) est intégré avec un contrôleur secondaire du système de processeur secondaire (420).

24. Appareil selon la revendication 14, dans lequel le module de partage (450) est inclus dans le système de processeur primaire (410).

25. Appareil selon la revendication 14, dans lequel le module de communications sans fil est adapté pour communiquer avec un ou plusieurs dispositifs GPRS secondaires via un réseau GPRS.

26. Appareil selon la revendication 14, dans lequel le module de partage (450) est adapté pour communiquer avec un contrôleur hôte USB et un module GPRS.

27. Appareil selon la revendication 14, dans lequel le module de partage (450) est adapté pour commuter la commande du module de communications sans fil entre le système de processeur primaire (410) et le système de processeur secondaire (420), lors de la survenance d'un événement, dans lequel l'événement inclut l'ouverture d'un couvercle d'ordinateur, la réception d'un message de données par le système de processeur primaire, la réception d'un message de données par le système de processeur secondaire, la fermeture d'un couvercle d'ordinateur et la réception d'une commande de commutation.

28. Programme exécutable par machine comprenant des instructions adaptées, lorsqu'elles sont exécutées, pour effectuer le procédé selon l'une quelconque des revendications 1 à 13.

29. Stockage lisible par machine stockant un programme selon la revendication 28.
